# EUROPEAN PATENT APPLICATION

(11) **EP 4 566 689 A1**
(43) Date of publication of application: **11.06.2025**
(21) Application number: 23425066.0
(22) Date of filing: 04.12.2023
(51) Int. Cl.: B01D 19/04, D21H 21/12, D21H 21/24

(54) **ANTI-FOAMING ADDITIVE COMPOSITION**

(71) Applicant: Carbochem S.r.l., 21043 Castiglione Olona (VA) (IT)
(72) Inventor: VAGO, Riccardo, 21051 Arcisate (VA) (IT); ZOCCOLER, Greta Alice, 21100 Varese (IT); BARTOT, Luca, 32035 Santa Giustina (BL) (IT)
(74) Representative: Botti & Ferrari S.p.A.

(57) **Abstract**

The present invention relates to an anti-foaming additive composition comprising water, at least one anti-foaming agent, at least one surfactant and at least one retentive agent; the present invention relates also to method for abating foam formation by using said anti-foaming additive composition in a papermaking process.

## Description

### Field of application

In its more general aspect, the present invention provides for an anti-foaming additive composition.

In particular, the invention relates to an anti-foaming additive composition for paper industry, based on an oil-in-water emulsion.

The present invention also relates to a method for abating foam formation by using said anti-foaming additive composition in a papermaking process.

### Prior art

Foam is often generated due to chemical interactions on the paper machine combined with rapid motions involved in the paper making process.

When paper machines generate foam and entrained air, it adversely affects production rates and paper quality. Defoamers facilitate the process of paper making and help to prevent drainage issues.

Slower production rates and inferior paper yield aren't the only problems caused by foam formation. An excess of foam also creates workplace safety hazards and raises production costs, such as higher energy costs and increasing chemical additives demand on paper machines.

In particular, in the papermaking process, the foam formation problem has a greater impact on the implementation of process conditions and directly affects the quality of the so-produced paper.

Production practice has proved that the use of defoamers to control foam is the most economical and effective measure. This method does not need to change the original production process, nor does it require a large amount of equipment investment and maintenance costs.

Using defoamers makes paper production process safer, more environmentally friendly, and increases the overall production efficiency, all while reducing production costs.

However, the use of defoamers entails an increase of the overall paper production costs due to the intrinsic cost of the raw materials use for the anti-foam production.

In pulp industry, specifically, silicone-based defoamers are sometimes preferred over other kind of defoamers used in papermaking industry due to lower dosage requirements and cost-effective performance.

However, in order to increase the longevity of silicone-based defoamers it is necessary to use larger amounts of these defoamers in the papermaking process. This would result in additional problems due to presence of higher amounts of hydrophobic silicone compounds in the process, which have a tendency to stick on fibers, thereby requiring additional washing steps later in the process.

The technical problem of the present invention is therefore to provide a more effective antifoaming agent for paper industry, thereby overcoming the aforementioned drawbacks previously mentioned with reference to the prior art and which allows to lower the overall paper production costs.

### Summary of the invention

That technical problem is solved by an anti-foaming additive composition comprising the following components:
- water;
- at least one anti-foaming agent;
- at least one surfactant;
- at least one retentive agent, said retentive agent being a polyacrylamide or a mixture of polyacrylamide.

In particular, said anti-foaming additive composition is an emulsion; more in particular, said anti-foaming additive composition is an oil-in-water emulsion.

In particular, the anti-foaming additive composition according to the present invention comprises particles (i.e. aggregated particles or micelles) formed by the association of said at least one anti-foaming agent and said at least one surfactant, said aggregated particles having a particle-size average dimension comprised between 1 µm and 10 µm, as measured with Malvern Mastersizer 3000 analyser.

Advantageously, the present anti-foaming additive composition can be easily dispersed in the aqueous medium, according to the final required application.

In other words, the present invention successfully provides for a new type of anti-foaming additive composition, which can be used in papermaking industry.

Accordingly, the present anti-foaming additive composition can be easily dispersed due to the characteristic particulate average dimensions which are comprised in the present composition, in which the at least one anti-foaming agent has the function of reducing the surface tension existing there between aqueous medium and air, while destroying air bubbles, and the retentive agent has the function of drainage aid.

In accordance with the present invention the terms "particle size" and "particle-size average dimension" mean a value indicating a volume-based particle size of the particles, i.e. a volume equivalent sphere diameter, comprised in the anti-foaming additive composition according to the present invention, which is calculated by means of a laser diffraction technique. The volume-based particle size equals the diameter of the ideal sphere that fully comprises a given particle.

Preferably, said particles have a particle-size average dimension comprised between 2 µm and 5 µm, as measured with Malvern Mastersizer 3000 analyser.

Preferably, said polyacrylamide or the polyacrylamides in said mixture of polyacrylamides are selected from anionic polyacrylamides, cationic polyacrylamides, non-ionic polyacrylamides or amphoteric polyacrylamides.

More preferably, said anionic polyacrylamides have a substitution degree comprised between 1 and 60.

Alternatively, said cationic polyacrylamides have a substitution degree comprised between 1 and 90.

More preferably, said polyacrylamide or the polyacrylamides in said mixture of polyacrylamides are selected from branched polyacrylamides, linear polyacrylamides or crossed-linked polyacrylamides.

Preferably, said polyacrylamide or the polyacrylamides in the mixture of polyacrylamides have a weight-average molecular weight of at least 500000 Da.

According to a preferred embodiment, said polyacrylamide, or the polyacrylamides in the mixture of polyacrylamides, have a weight-average molecular weight of at least 1 000 000 Da, more preferably at least 5 000 000 Da, even more preferably at least 10 000 000 Da.

According to one embodiment, the polyacrylamide or the polyacrylamides in the mixture of polyacrylamides may have a weight average molecular weight in the range of the 5 000 000 Da - 100 000 000 Da, preferably between 5 000 000 Da and 40 000 000 Da.

According to the present disclosure, the weight-average molecular weight of the aforementioned polyacrylamide has been measured by using a gel permeation chromatography technique, also known as size exclusion chromatography (GPC/SEC).

Preferably, said at least one anti-foaming agent is selected from C8-C30 fatty alcohols, more preferably C18-C30 fatty alcohols, ethylene oxide/propylene oxide block copolymers, poly alkylene glycol esters, ethylene oxide/propylene oxide block copolymers, polypropylene glycol, distillation residues from the alcohol production of linear long-chain alcohols according to the Ziegler process, more preferably said long-chain alcohols being C16-C24 alcohols, distillation residues which are obtainable in the preparation of linear long-chain alcohols by the oxo synthesis, more preferably said long-chain alcohols being C16-C24 alcohols, poly glycerol esters, C18-C30 alkyl behenate, fatty esters of alcohols of not less than 22 carbon atoms, more preferably fatty esters of C22-C30 alcohols, C1-C36 carboxylic acids and/or a fatty ester thereof, silicone-based antifoam agents, benzyl alkyl ethers, ethylene bis stearamide (EBS), stearate defoamers, oil based defoamers, paraffinic compounds or any combination thereof.

Preferably, the anti-foaming agent is a C8-C30 alcohol, more preferably a C18-C30 alcohol.

According to a preferred embodiment, the anti-foaming agent consists of linear alcohols C18-C30 (synonym: ethene, homopolymer, oxidized, hydrolysed, distillation residues, from C16-18 alcohols).

Preferably, said polypropylene glycol antifoam agent is polypropylene glycol 200-6000, i.e. polypropylene glycol (PPG) having a number average molecular weight (Mn) comprised between 200 and 6000, even more preferably polypropylene glycol 200-2000, i.e. PPG having a number average molecular weight (Mn) comprised between 200 and 2000.

Preferably, said silicone-based antifoam agent is selected from polysiloxanes, modified polysiloxanes or any combination thereof.

Alternatively, the anti-foaming additive composition according to the present invention is deprived of silicone-based antifoam agents.

In particular, said distillation residue from the alcohol production of linear long-chain alcohols according to the Ziegler process antifoam agent is a distillation residue which is obtainable in the preparation of C 16-C24 alcohols and which is alkoxylated.

In particular, said distillation residues which are obtainable in the preparation of linear long-chain alcohols by the oxo synthesis are distillation residue which are obtainable in the preparation of C16-C24 alcohols and which are alkoxylated.

Preferably, said stearate defoamer is aluminium stearate.

Preferably, said at least one surfactant is selected from alcohol surfactant, more preferably ethoxylated or non-ethoxylated alcohol surfactant, sorbitan ester surfactant, more preferably ethoxylated or non-ethoxylated sorbitan ester surfactant, or any combination thereof.

Preferably, said at least one surfactant is a sorbitan ester surfactant, more preferably ethoxylated or non- ethoxylated.

According to one embodiment, the weight ratio of the polyacrylamide and the defoamer in the anti-foaming additive composition may be in range of 1:300 to 1:8, preferably in range of 1:250 to 1:50, even more preferably is in the range of 1:200 to 1:120.

By using the anti-foaming additive composition according to the present invention in a papermaking process, which comprises both at least one anti-foaming agent and at least one retentive agent, the retentive agent being a polyacrylamide or a mixture of polyacrylamides, the following advantages can be achieved, as it will be discussed further with reference to the process according to the invention and to the experimental part:
- the working speed of the paper machine is increased, thereby increasing the overall production yield;
- the turbidity in white waters is dramatically lowered;
- the concentration of the anti-foaming agent in white waters is lowered.

The present anti-foaming additive composition can therefore successfully replace conventional anti-foaming agents, normally used in papermaking processes.

Accordingly, the present invention further provides for the use of the above-mentioned anti-foaming additive composition in a papermaking process, preferably by dispersing it into a dispersing medium comprising paper fibres, more preferably said dispersing medium being white water.

The above technical problem is also solved by a method for abating foam formation by using said anti-foaming additive composition in a papermaking process, said method comprising the following steps:
a) providing a dispersing medium comprising paper fibres;
b) dispersing the anti-foaming additive composition according to the present invention in said dispersing medium comprising paper fibres, thereby obtaining a dispersing medium comprising paper fibres and said anti-foaming additive composition.

Advantageously, by dispersing the anti-foaming additive composition in said dispersing medium comprising paper fibres, the formation of foam is prevented and/or the eventually present foam is abated.

According to the present invention, the term "paper fibres" means fibres comprising cellulose or which are made of cellulose, namely the terms "paper fibres" and "cellulose fibres" may be used interchangeably. Preferably, the dispersing medium comprising paper fibres is white water.

Alternatively, according to a preferred embodiment of the process of the invention, said step a) comprises the following sub-steps:
- dispersing raw material comprising paper fibres in water, preferably said raw material being a paper stock, thereby obtaining a paste comprising paper fibres;
- diluting said paste comprising paper fibres with a water-containing liquid, thereby obtaining a slurry;
- by means of a paper machine, draining said slurry, thereby obtaining a preliminary sheet of paper and an extraction liquid;
- eventually recycling said extraction liquid, said extraction liquid being used as water-containing liquid in said diluting sub-step;
wherein said dispersing medium comprising paper fibres is said paste comprising paper fibres, said slurry or said extraction liquid, if said extraction liquid is recycled.

Indeed, according to the latter embodiment, the subsequent step b) may be carried out by dispersing the anti-foaming additive composition according to the present invention in said paste comprising paper fibres, in said slurry or in said extraction liquid.

According to the latter preferred embodiment, the extraction liquid is white water.

Preferably, said diluting sub-step is carried out in a head box.

Preferably, said water-containing liquid comprises or consists of said extraction liquid; more preferably, during said recycling sub-step said extraction liquid is fed to said head box.

In particular, during said draining step said extraction liquid, i.e. said white water, is collected in a whitewater pit.

Preferably, said step b) is carried out by dispersing the anti-foaming additive composition according to the present invention in the extraction liquid, i.e. in white water, collected in a white water pit.

Preferably, said preliminary sheet of paper is then optionally washed with water and dried.

According to the present invention, with the term "white water" or "white waters" is intended as a fine particle slurry which is used throughout the present papermaking process, comprising fine fibre particles. In particular, white water drains from the paper stock into pit below the paper machine.

As disclosed before, white water may be used for stock dilution at the wet end of the paper machine, thereby obtaining a whitewater-diluted stock.

Preferably, during said step b) the concentration of said at least one anti-foam agent in said dispersing medium comprising said paper fibres anti-foaming additive composition and said additive composition according to the present invention is comprised between 0.01 and 30 litres/ton of dry paper, more preferably between 0.1 and 15 litres/ton.

The features and advantages of the present invention will be more apparent from the detailed description, comprising experimental examples provided hereinbelow, of some modes of implementation of the method for abating foam formation according to the present invention, provided by way of non-limiting examples.

### Detailed description

In general, the anti-foaming additive composition according to the present invention may be obtained by a production process comprising the following steps:
- mixing water, at least one anti-foaming agent, at least one surfactant and at least one retentive agent, said retentive agent being a polyacrylamide or a mixture of polyacrylamide, thereby obtaining an emulsion, in particular an oil-in-water emulsion;
- optionally, homogenizing said emulsion, preferably until the particles of said emulsion have a particle-size average dimension comprised between 1 µm and 10 µm, preferably between 2 µm and 5 µm, as measured with Malvern Mastersizer 3000 analyser.

Preferably, said mixing step is carried out at a temperature comprised between 50°C and 95°C, more preferably between 70°C and 95°C.

Preferably, after said homogenizing step, the production process for obtaining the anti-foaming additive composition according to the present invention comprises a cooling step, wherein the anti-foaming additive composition thereby obtained is cooled or let cooled, more preferably to a temperature comprised between 10°C and 45°C.

Preferably, after said homogenizing step or after said cooling step a biocide agent is added to the anti-foaming additive composition.

The method for abating foam formation according to the present invention may be carried out by means of a conventional plant for papermaking process.

In particular, according to a preferred embodiment of the present method for abating foam formation the anti-foaming additive composition is added to white waters.

### Example 1

The anti-foaming additive composition according to the present invention was produced as disclosed in the following.

In a beaker having 1 Liter capacity the components listed in the following Table 1 have been mixed:

**Table 1**

| *Component* | *Function* | *Weight (g)* |
|---|---|---|
| Water | Solvent | 358.45 g |
| Tridac ISO 40/70 (produced by Sasol) | Surfactant | 7.00 g |
| SABOSORB MSE MB (produced by SABO) | Surfactant | 7.00 g |
| SABOSORB MS MB (produced by SABO) | Surfactant | 12.00 g |
| CARBO ATF 100 - SP (produced by Carbochem) | Antifoam base | 75.00 g |
| NAFOL 20+ (produced by SASOL) | Antifoam base | 25.00 g |
| AXFLOC AF 135 WW (produced by Axchem Italia) | Retentive agent | 10.00 g |

The thus-obtained mixture has been heated up to 95°C and then it has been cooled to 40°C; then, 0.5 g of Mergal BIT 20 has been added as biocide agent.

### Example 2

The method according to the present invention was carried out in a papermaking machine, during the production of test liner and fluting by dispersing the anti-foaming additive composition according to Example 1 in white waters at a feeding rate of 3.0 liters/hour.

During said dispersion step, the flow rate of the white waters was equal to 10 ton/hour.

After the dispersion step, the turbidity in white waters decreased and it was possible to raise the speed of the paper machine as shown in following Table 2:

**Table 2**

| | Example 2 |
|---|---|
| Machine speed | 380 m/min |
| Turbidity | 450 NTU |
| HB Air (less is better) | 0.8% |

### Example 3 (comparative example not according to the invention)

The antifoaming additive Paracum 397 (produced by KLK Kolb) has been dispersed in white waters at a feeding rate of 3.0 liters/hour.

During said dispersion step, the flow rate of the white waters was equal to 10 ton/hour.

After the dispersion step, the turbidity in white waters has been measured and it was possible to raise the speed of the paper machine as showed in following Table 3:

**Table 3**

| | Example 3 |
|---|---|
| Machine speed | 350 m/min |
| Turbidity | 900 NTU |
| HB Air (less is better) | 0.63% |

### Example 4

The method according to the present invention was carried out in a papermaking machine, during the production of paper for shopping bags, packaging paper and food paper, by dispersing the anti-foaming additive composition according to Example 1 in white waters at a feeding rate of 3.0 liters/hour.

During said dispersion step, the flow rate of the white waters was equal to 6 ton/hour.

After the dispersion step, the turbidity in white waters decreased and has been measured as shown in following Table 4:

**Table 4**

| | Example 4 |
|---|---|
| Turbidity (white water) | 90 NTU |
| Turbidity (DAF) | 80 NTU |
| HB Air (less is better) | 0.55% |
| Coagulant feeding rate | 10 l/h |
| Additional retention aid concentration | 0 ppm |

### Example 5 (comparative example not according to the invention)

The antifoaming additive AXFOAM FM3550B (produced by Axchem Italia) has been dispersed in white waters at a feeding rate of 3.0 liters/hour, during the production of paper for shopping bags, packaging paper and food paper, in the same paper machine used in Example 3.

During the dispersion step, the flow rate of the white waters was equal to 6 ton/hour.

After the dispersion step, the turbidity in white waters has been measured as shown in following Table 5:

**Table 5**

| | Example 5 |
|---|---|
| Turbidity (white water) | 190 NTU |
| Turbidity (DAF) | 130 NTU |
| HB Air (less is better) | 0.4% |
| Coagulant feeding rate | 12 l/h |
| Additional retention aid concentration | 150 ppm |

As demonstrated, during Example 4 it was possible to better reduce the turbidity in white waters without adding additional retention aid. Additionally, during Example 4 a paper sheet with improved mechanical and physical properties has been obtained.

### Example 6

The anti-foaming additive composition according to the present invention was produced as disclosed in the following.

In a beaker having 1 Liter capacity the components listed in the following Table 6 have been mixed:

**Table 6**

| *Component* | *Function* | *Weight (g)* |
|---|---|---|
| Water | Solvent | 278.84 g |
| Tridac ISO 40/70 (produced by Sasol) | Surfactant | 1.4 g |
| Tridac ISO 5 (produced by Sasol) | Surfactant | 1.4 g |
| CARBO ATF 100 - SP (produced by Carbochem) | Antifoam base | 40.00 g |
| NAFOL 20+ (produced by SASOL) | Antifoam base | 40.00 g |
| AXFLOC AF 135 WW (produced by Axchem Italia) | Retentive agent | 8.00 g |

The thus-obtained mixture has been heated up to 75°C and then homogenized by means of Ultra Turrax homogenizer, which was operated at 12000 rpm for 30 seconds, thereby obtaining a homogenized mixture.

The homogenized mixture has been cooled to 40°C; then, 0.5 g of Mergal BIT 20 has been added as biocide agent.

The thus obtained anti-foaming additive composition had particles having a particle-size average dimension equal to 3 µm, as measured with Malvern Mastersizer 3000 analyser.

### Example 7

The method according to the present invention was carried out in a papermaking machine, during the production of test liner and fluting, by dispersing the anti-foaming additive composition according to Example 6 in white waters at a feeding rate of 13.0 liters/hour.

During said dispersion step, the flow rate of the white waters was equal to 21 ton/hour.

After the dispersion step, the turbidity in white waters decreased and it was possible to raise the speed of the paper machine as showed in following Table 7:

**Table 7**

| | Example 7 |
|---|---|
| Machine speed | 670 m/min |
| Turbidity (white water) | 389 NTU |
| HB Air (less is better) | 0.89% |
| Density of fiber in white water (stock density) | 1,10 g/l |

### Example 8 (comparative example not according to the invention)

The antifoaming additive BIOFOAM W15 (produced by NCR Biochemicals) in a papermaking machine, during the production of test liner and fluting, has been dispersed in white waters at a feeding rate of 13.0 liters/hour.

During said dispersion step, the flow rate of the white waters was equal to 21 ton/hour.

After the dispersion step, the turbidity in white waters has been measured and it was possible to raise the speed of the paper machine as showed in following Table 8:

**Table 8**

| | Example 8 |
|---|---|
| Machine speed | 670 m/min |
| Turbidity (white water) | 431 NTU |
| HB Air (less is better) | 1.67% |
| Density of fiber in white water (stock density) | 1,9 g/l |

Regarding Examples 7 and 8, by means of the same papermaking machine, firstly Example 7 was carried out and, subsequently, Example 8 was carried out.

During Example 7 and before adding the anti-foaming additive composition of the invention to white water, the stock density was 1,87 g/l. Then, the anti-foaming additive composition of the invention was added, and the stock density decreased to 1,10 g/l.

In a second moment, Example 8 was carried out by adding to the same white water BIOFOAM W15. The stock density raised form 1,10 g/L to 1,9 g/L.

## Claims

1. Anti-foaming additive composition comprising the following components:
- water;
- at least one anti-foaming agent;
- at least one surfactant;
- at least one retentive agent,
wherein said retentive agent is a polyacrylamide or a mixture of polyacylamides and said anti-foaming additive composition is an emulsion.

2. Anti-foaming additive composition according to claim 1, wherein said anti foaming additive composition is an oil-in-water emulsion.

3. Anti-foaming additive composition according to claim 1 or 2, wherein said anti-foaming additive composition comprises particles formed by the association of said at least one anti-foaming agent and said at least one surfactant, said aggregated particles having a particle-size average dimension comprised between 1 µm and 10 µm, as measured with Malvern Mastersizer 3000 analyser.

4. Anti-foaming additive composition according to anyone of the preceding claims, wherein said polyacrylamide or the polyacrylamides in said a mixture of polyacrylamides are selected from anionic polyacrylamides, amphoteric polyacrylamides, non-ionic polyacrylamides or cationic polyacrylamides.

5. Anti-foaming additive composition according to claim 4, wherein said anionic polyacrylamides have a substitution degree comprised between 1 and 60 and/or said cationic polyacrylamides have a substitution degree comprised between 1 and 90.

6. Anti-foaming additive composition according to claim 4 or 5, wherein said polyacrylamide or the polyacrylamides of said mixture of polyacrylamides have a weight-average molecular weight of at least 500000 Da.

7. Anti-foaming additive composition according to anyone of the preceding claims 1-6, wherein said at least one anti-foaming agent is selected from C8-C30 fatty alcohols, preferably C18-C30 fatty alcohols ethylene oxide/propylene oxide block copolymers, poly alkylene glycol esters, ethylene oxide/propylene oxide block copolymers, polypropylene glycol, distillation residue from the alcohol production of linear long-chain alcohols according to the Ziegler process, preferably said long-chain alcohols being C16-C24 alcohols, distillation residues which are obtainable in the preparation of linear long-chain alcohols by the oxo synthesis, more preferably said long-chain alcohols being C16-C24 alcohols, poly glycerol esters, C18-C30 alkyl behenate, fatty esters of alcohols of not less than 22 carbon atoms, preferably fatty esters of C22-C30 alcohols, C1-C36 carboxylic acids and/or a fatty ester thereof, silicone-based antifoam agents, benzyl alkyl ethers, ethylene bis stearamide (EBS), stearate defoamers, oil based defoamers, paraffinic compounds or any combination thereof.

8. Anti-foaming additive composition according to anyone of the preceding claims 1-7, wherein said at least one surfactant is selected from alcohol surfactant, sorbitan ester surfactant or any combination thereof.

9. Anti-foaming additive composition according to anyone of the preceding claims 1-8, wherein the weight ratio of said at least one polyacrylamide and said at least one defoamer is in the range of 1:300 to 1:8, preferably in range of 1:250 to 1:50, more preferably is in the range of 1:200 to 1:120.

10. Use of the anti-foaming additive composition according to anyone of claims from 1 to 9 in a papermaking process, preferably by dispersing it into a dispersing medium comprising paper fibres, more preferably said dispersing medium being white water.

11. Method for abating foam formation by using the anti-foaming additive composition according to anyone of claims from 1 to 9 in a papermaking process, said method comprising the following steps:
a) providing a dispersing medium comprising paper fibres;
b) dispersing said anti-foaming additive composition in said dispersing medium comprising paper fibres, thereby obtaining a dispersing medium comprising paper fibres and said anti-foaming additive composition.

12. Method for abating foam formation according to claim 11, wherein the dispersing medium comprising paper fibres is white water.
